# EUROPEAN PATENT APPLICATION

(11) **EP 4 629 674 A1**
(43) Date of publication of application: **08.10.2025**
(21) Application number: 22966865.2
(22) Date of filing: 30.11.2022
(51) Int. Cl.: H04W 8/24, H04W 74/00

(54) **COMMUNICATION METHOD AND APPARATUS, AND STORAGE MEDIUM**

(71) Applicant: Beijing Xiaomi Mobile Software Co., Ltd., Beijing 100085 (CN)
(72) Inventor: WU, Jinhua, Beijing 100085 (CN)
(74) Representative: Dehns Germany Partnerschaft mbB
(86) International application number: PCT/CN2022/135681
(87) International publication number: WO 2024/113274

(57) **Abstract**

The present disclosure relates to a communication method and apparatus, and a storage medium. The method comprises: a terminal device sends first information related to energy of the terminal device, wherein the first information can be used for instructing a network device to determine communication state information of the terminal device. Therefore, ambient Internet of things communication can be better supported according to the first information related to the energy of the terminal device, so that constant communication or on-demand communication is effectively realized.

## Description

### TECHNICAL FIELD

The present disclosure relates to the technical field of communication, and in particular, to a communication method, apparatus and storage medium.

### BACKGROUND

Ambient power-enabled Internet of Things (Ambient power enabled IoT) is an IoT that supports ambient power. In certain usage scenarios, the IoT devices can be powered by energy from the environment. However, due to the instability of ambient energy, it is impossible to continuously provide the IoT devices with enough power through the ambient energy to support continuous wireless communication between the IoT devices and the mobile network.

### SUMMARY

In order to overcome the above problems existing in the related art, the present disclosure provides a communication method, apparatus and storage medium.

According to a first aspect of the embodiments of the present disclosure, a communication method is provided, which is applied to a terminal device, and the method includes:
sending first information related to energy of the terminal device; where the first information is used to instruct a network device to determine communication status information of the terminal device.

According to a second aspect of the embodiments of the present disclosure, a communication method is provided, which is applied to a network device, and the method includes:
receiving first information related to energy of a terminal device;
determining communication status information of the terminal device according to the first information; and
sending the communication status information.

According to a third aspect of the embodiments of the present disclosure, a communication apparatus is provided, which is applied to a terminal device, and the apparatus includes:
an information sending module, configured to send first information related to energy of the terminal device; where the first information is used to instruct a network device to determine communication status information of the terminal device.

According to a fourth aspect of the embodiments of the present disclosure, a communication apparatus is provided, which is applied to a network device, and the apparatus includes:
an information receiving module, configured to receive first information related to energy of a terminal device;
a status determination module, configured to determine communication status information of the terminal device according to the first information; and
a status sending module, configured to send the communication status information.

According to a fifth aspect of the embodiments of the present disclosure, a communication apparatus is provided, including:
a processor; and
a memory for storing instructions executable by the processor;
where the processor is configured to execute the steps of the communication method provided in the first aspect of the present disclosure.

According to a sixth aspect of the embodiments of the present disclosure, a communication apparatus is provided, including:
a processor; and
a memory for storing instructions executable by the processor;
where the processor is configured to execute the steps of the communication method provided in the second aspect of the present disclosure.

According to a seventh aspect of the embodiments of the present disclosure, a computer-readable storage medium is provided, on which computer program instructions are stored. When the computer program instructions are executed by a processor, the steps of the communication method provided in the first aspect of the present disclosure are implemented.

According to an eighth aspect of the embodiments of the present disclosure, a computer-readable storage medium is provided, on which computer program instructions are stored. When the computer program instructions are executed by a processor, the steps of the communication method provided in the second aspect of the present disclosure are implemented.

The technical solutions provided by the embodiments of the present disclosure may include the following beneficial effects: the terminal device sends first information related to the energy of the terminal device, and the first information can be used to instruct the network device to determine the communication status information of the terminal device, thereby better supporting the ambient IoT communication according to the first information related to the energy of the terminal device, and achieving effective response to always-on communication or on-demand communication.

It should be understood that the foregoing general description and the following detailed description are exemplary and explanatory only, and cannot limit the present disclosure.

### BRIEF DESCRIPTION OF THE DRAWINGS

The accompanying drawings, which are incorporated in and constitute a part of this specification, illustrate the embodiments consistent with the present disclosure and, together with the specification, serve to explain the principles of the present disclosure.
FIG. 1 is a schematic diagram showing a communication system according to an exemplary embodiment.
FIG. 2 is a flowchart showing a communication method according to an exemplary embodiment.
FIG. 3 is a flowchart showing a communication method according to an exemplary embodiment.
FIG. 4 is a flowchart showing a communication method according to an exemplary embodiment.
FIG. 5 is a flowchart showing a communication method according to an exemplary embodiment.
FIG. 6 is a flowchart showing a communication method according to an exemplary embodiment.
FIG. 7 is a flowchart showing a communication method according to an exemplary embodiment.
FIG. 8 is a flowchart showing a communication method according to an exemplary embodiment.
FIG. 9 is a flowchart showing a communication method according to an exemplary embodiment.
FIG. 10 is a flowchart showing a communication method according to an exemplary embodiment.
FIG. 11 is a flowchart showing a communication method according to an exemplary embodiment.
FIG. 12 is a flowchart showing a communication method according to an exemplary embodiment.
FIG. 13 is a flowchart showing a communication method according to an exemplary embodiment.
FIG. 14 is a schematic diagram of a communication system according to an exemplary embodiment.
FIG. 15 is a flowchart showing a communication method according to an exemplary embodiment.
FIG. 16 is a block diagram showing a communication apparatus according to an exemplary embodiment.
FIG. 17 is a block diagram showing a communication apparatus according to an exemplary embodiment.

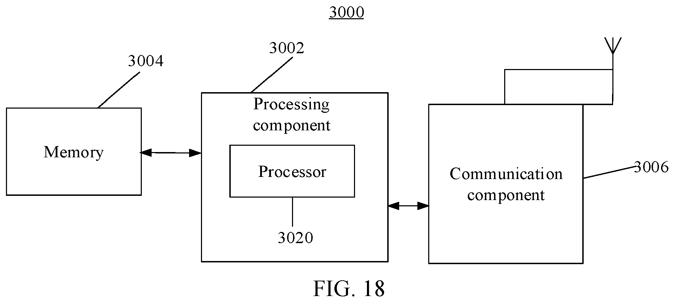

FIG. 18 is a block diagram showing a communication apparatus according to an exemplary embodiment.

### DETAILED DESCRIPTION

Exemplary embodiments will be described in detail herein, examples of which are illustrated in the accompanying drawings. When the following description refers to the drawings, the same numbers in different drawings refer to the same or similar elements unless otherwise indicated. The implementations described in the following exemplary embodiments do not represent all implementations consistent with the present disclosure. Rather, they are merely examples of apparatus and method consistent with some aspects of the present disclosure and detailed in the claims.

It should be noted that all actions of acquiring signals, information or data in the present disclosure are carried out in compliance with the corresponding data protection laws and policies of the located country and with the authorization given by the owner of the corresponding apparatus.

In the description of the present disclosure, the terms used, such as "first", "second", etc., are used to distinguish similar objects and are not necessarily understood as a specific order or sequence. In addition, in the description with reference to the accompanying drawings, the same symbols in different drawings represent the same elements unless otherwise stated.

In the description of the present disclosure, unless otherwise specified, "a plurality of" means two or more than two, and other quantifiers are similar thereto; "at least one item", "one or more items" or similar expressions refer to any combination of these items, including any combination of a single item or plural items. For example, at least one item can represent any number; for another example, one or more items among *a, b and c* can represent: *a, b, c, a-b, a-c, b-c,* or *a-b-c,* where *a, b,* c may be single or multiple; "and/or" is a kind of association relationship that describes the associated objects, indicating that there may be three kinds of relationships, for example, A and/or B may represent: A exists alone, A and B exist at the same time, and B exists alone, where A and B may be singular or plural.

Although operations or steps are described in a specific order in the drawings in the embodiments of the present disclosure, it should not be understood that these operations or steps are required to be performed in the specific order shown or in a serial order, or all the operations or steps shown are required to be performed to obtain the desired result. In the embodiments of the present disclosure, these operations or steps can be performed in any order; these operations or steps can also be performed in parallel; or some of these operations or steps can be performed.

The implementation environment of the embodiments of the present disclosure is first introduced below.

The technical solutions of the embodiments of the present disclosure can be applied to various communication systems. The communication systems may include one or more of the 4th Generation (4G) communication system, the 5th Generation (5G) communication system, and other future wireless communication systems (such as 6G). The communication systems may also include a Public Land Mobile Network (PLMN) network, a Device-to-Device (D2D) communication system, a Machine to Machine (M2M) communication system, an Internet of Things (IoT) communication system, a vehicle-to-everything (V2X) communication system, or one or more of other communication systems.

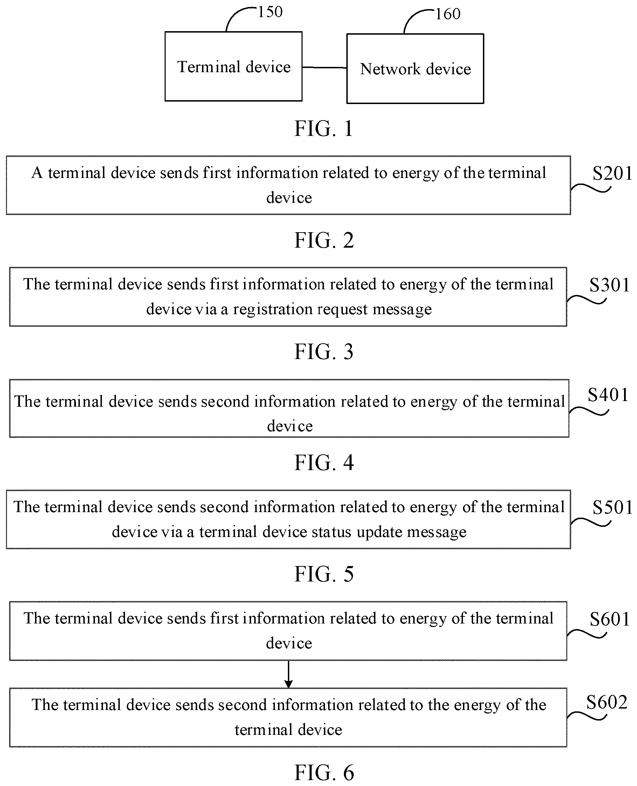

FIG. 1 is a schematic diagram of a communication system according to an exemplary embodiment. As shown in FIG. 1, the communication system may include a terminal device 150 and a network device 160. The communication system may be used to support 4G network access technology, such as Long Term Evolution (LTE) access technology, or 5G network access technology, such as New Radio Access Technology (New RAT), or other future wireless communication technologies. It should be noted that in the communication system, the numbers of the network devices and the terminal devices may be one or more, and the numbers of the network devices and the terminal devices of the communication system shown in FIG. 1 are only an adaptive example, which is not limited by the present disclosure.

The terminal device 150 in FIG. 1 may be an electronic device that provides voice or data connectivity. For example, the terminal device may also be referred to as a user equipment (UE), a Subscriber Unit, a mobile station (MS), a station, a terminal, etc. For example, the terminal device may include a smart phone, a smart wearable device, a smart speaker, a smart tablet, a wireless modem, a wireless local loop (WLL) station, a Personal Digital Assistant (PDA) or a Customer Premise Equipment (CPE), etc. With the development of the wireless communication technology, devices that can access a communication system, can communicate with a network device of a communication system, can communicate with other objects through a communication system, or device that can directly communicate between two or more devices may all be the terminal devices in the embodiments of the present disclosure, for example, terminals and cars in smart transportation, household devices in smart homes, power meter reading instruments, voltage monitoring instruments, environmental monitoring instruments in smart grids, video monitoring instruments in smart security networks, cash registers, etc. In the embodiments of the present disclosure, the terminal device may communicate with the network device. Multiple terminal devices may also communicate with each other. The terminal device may be static or mobile, which is not limited in the present disclosure.

In the embodiments of the present disclosure, the above terminal device 150 may include an ambient-powered IoT device (ambient IoT device). The terminal device may be a mobile station, a tablet computer, etc. that can utilize ambient power, or a mobile terminal, a fixed terminal, etc. in various fields that can utilize ambient power. The specific form of the terminal device is not limited in the present disclosure.

In some embodiments, for an ambient power enabled IoT device using solar power, the device can perform communication as normal during the sunny daytime, but during the rainy daytime or night, the device may need to use the stored power and may be in a dormant state in which only signaling/data is received or no signaling/data is sent. The ambient power enabled IoT device using other ambient powers also have similar situations. Therefore, the ambient power enabled IoT device may not have the continuous power to cope with always-on communication or on-demand communication.

In some embodiments, the network device 160 in FIG. 1 may include a device for supporting the access of the terminal device and providing the wireless network communication function for the terminal device. In some embodiments of the present disclosure, the network device may include an access network device and a core network device. The access network device may be a Radio Access Network (RAN) or an Access Network (AN). For example, the access network device may be an evolutionary Node B (eNB or eNodeB) in LTE; the access network device may also be the next generation Node B (gNB or gNodeB) in the 5G network; the access network device may also be a NG Radio Access Network (NG-RAN) device; the access network device may also be a base station in a future evolved public land mobile network (Public Land Mobile Network, PLMN), a Broadband Network Gateway (BNG), an aggregation switch or a non-3GPP (3rd Generation Partnership Project) access device. Optionally, the access network device in the embodiments of the present disclosure may include various forms of base stations, such as: a macro base station, a micro base station (also called small station), a relay station, an access point, a 5G base station or future base station, a satellite, a transmission point (Transmitting and Receiving Point, TRP), a Transmitting Point (TP), a mobile switching center, and Device-to-Device (D2D), Machine-to-Machine (M2M), Internet of Things (IoT), vehicle-to-everything (V2X) or other devices that undertake the function of the base station in the communication, etc., which are not specifically limited by the embodiments of the present disclosure. For the convenience of description, in the embodiments of the present disclosure, the apparatuses that provide the wireless communication function for the terminal device are collectively referred to as the access network device or the base station. The core network device can be used to perform one or more of the functions of mobility management, call control, session management, registration authentication, and billing on the terminal device. The core network device may include one or more entities, which may be hardware, or software divided from the function, or a structure that combines the above two. It should be noted that this entity can also be called a function.

The network device involved in the present disclosure may include an application function (AF), or may also include other entities that provide application services, or may also include other entities that manage the communication status of the terminal device. The application function (AF) may be a functional unit in the core network device, or may be a functional entity independent of the core network device, which is not limited by the present disclosure.

FIG. 2 is a flowchart of a communication method according to an exemplary embodiment. The method can be applied to the terminal device in the above communication system. As shown in FIG. 2, the method may include the following steps.

In S201, the terminal device sends first information related to energy of the terminal device.

In some embodiments, the first information may include one or more of a power source indication parameter, an energy status parameter, and a location parameter of the terminal device, and may also include other information related to energy.

The power source indication parameter may be used to indicate a power source of the terminal device. The power source of the terminal device may be at least one of solar power (solar), light energy (light), wind energy (wind), motion energy/vibration energy (motion/vibration), heat energy (heat), and pressure energy (pressure), or may also be any other power source.

The energy status parameter may be used to indicate the current energy status of the terminal device.

In one implementation, the energy status parameter may be a parameter of an enumeration type. For example, the energy status of the terminal device may include a normal energy status (Normal energy), a low energy status (Low energy) or an extremely low energy status (Almost No energy). The value of the energy status parameter may include numerical values indicating the above three energy statuses. For example, a value of the energy status parameter being 1 may indicate that the terminal device is in the normal energy status, a value of the energy status parameter being 2 may indicate that the terminal device is in the low energy status, and a value of the energy status parameter being 3 may indicate that the terminal device is in the extremely low energy status.

In another implementation, the energy status parameter may be any numerical value between MIN and MAX, where MIN is used to represent the minimum value of the remaining energy of the terminal device (e.g., 0), and MAX may be used to represent the maximum value of the remaining energy of the terminal device (e.g., 1, 10, or 100).

The location parameter may be used to indicate the current location information of the terminal device.

In one implementation, the location parameter may include longitude and latitude information.

In another implementation, the location parameter may include at least one of a cell identifier, a base station identifier, a location area identifier, and an operator identifier.

In some embodiments, the above first information may further include a terminal identification parameter, which may be used to uniquely identify the terminal device. For example, the terminal identification parameter may include at least one of Subscription Concealed Identifier (SUCI), Subscriber Permanent Identifier (SUPI), Globally Unique Temporary Identifier (GUTI), Permanent Equipment Identifier (PEI), International Mobile Equipment Identity (IMEI), International Mobile Subscriber Identity (IMSI), Temporary Mobile Subscriber Identity (TMSI) or Radio Network Temporary Identity (RNTI). The above GUTI may be 5G-GUTI, 4G-GUTI, or GUTI under other network standards, which is not limited in the present disclosure.

By adopting the above method, the terminal device can send the first information related to the energy of the terminal device, and the first information can be used to instruct the network device to determine the communication status information of the terminal device, thereby better supporting the ambient IoT communication according to the first information related to the energy of the terminal device, and realizing effective response of always-on communication or on-demand communication.

In some embodiments, the above first information may be used to instruct the network device to determine the communication status information of the terminal device.

In some embodiments, the above-mentioned network device may be an application function (AF), or may be other entities that provide the application service, or may be other entities that manage the communication status of the terminal device.

In some embodiments, the terminal device may send the first information related to the energy of the terminal device to the above-mentioned network device.

Optionally, the terminal device may also receive a reception confirmation from the network device to determine that the network device has received the first information. If the terminal device does not receive the reception confirmation within a preset time after sending the first information, the first information may be resent, thereby enhancing the reliability of information sending. The preset time may be any time length preset by the terminal device, such as 1 second or 3 seconds.

In other embodiments, the terminal device may send the first information related to the energy of the terminal device to the network device in response to an information sending request. The information sending request may be a message that is sent by the network device to the terminal device and is used to instruct the terminal device to send the first information.

In some embodiments, the terminal device may send the first information related to the energy of the terminal device via a Non-Access Stratum (NAS) message.

In other embodiments, the terminal device may send the first information related to the energy of the terminal device via an Access Stratum (AS) message or a Radio Resource Control (RRC) message.

FIG. 3 is a flowchart of a communication method according to an exemplary embodiment. The method may be applied to a terminal device. As shown in FIG. 3, the method may include the following steps.

In S301, the terminal device sends first information related to energy of the terminal device via a registration request message.

For example, the terminal device may send a registration request message (Registration Request), which may include the first information related to the energy of the terminal device. The first information may include one or more of a power source indication parameter, an energy status parameter, and a location parameter of the terminal device.

It should be noted that, in the absence of contradiction, this embodiment can be combined with other embodiments or implementations involved in the communication methods for the terminal device and their various optional schemes. The introduction in the aforementioned embodiments of the present disclosure may be referred to, and no further details will be given here.

In this way, the terminal device can send the first information related to the energy of the terminal device through the registration request message.

In some embodiments, after sending the registration request message, the terminal device may also receive a registration acceptance message.

For example, the terminal device may send the registration request message to the network device (such as AF), and then receive a registration acceptance message (Registration Accept) sent by the network device in response to the registration request message.

In some embodiments, the registration acceptance message may include a location report trigger parameter (location report trigger), which can be used to instruct the terminal device to send new location information to the network device when leaving the local area.

In one implementation, if the terminal device does not receive a registration acceptance message from the network device within a preset time after sending the registration request message, the registration request message may be resent, thereby enhancing the reliability of message sending. The preset time may be any time length preset by the terminal device, such as 1 second or 3 seconds.

FIG. 4 is a flowchart of a communication method according to an exemplary embodiment. The method may be applied to a terminal device. As shown in FIG. 4, the method may include the following steps.

In S401, the terminal device sends second information related to energy of the terminal device.

The second information may include an energy status parameter and/or a location parameter of the terminal device. The second information may be the same as or different from the first information.

In some embodiments, the second information may be a subset of the first information. For example, the first information may include a static parameter and dynamic parameter related to the energy of the terminal device; the second information may include the dynamic parameter related to the energy of the terminal device. The static parameter includes an inherent parameter related to the hardware or structure of the terminal device, such as a power source indication parameter; the dynamic parameter may include a variable parameter related to the energy of the terminal device, such as an energy status parameter and/or location parameter.

In some embodiments, the second information may also include a terminal identification parameter.

In some embodiments of the present disclosure, the terminal device may send second information including the updated parameter related to energy when determining that the parameter related to the energy of the terminal device has changed.

In one implementation, the terminal device may send second information including the updated energy status parameter when determining that the energy status parameter of the terminal device has changed.

For example, the energy status of the terminal device changes from a normal energy status to a low energy status, and the second information sent by the terminal device may include an energy status parameter for indicating the low energy status.

For another example, the energy status of the terminal device changes from a low energy status to a normal energy status, and the second information sent by the terminal device may include an energy status parameter for indicating the normal energy status.

In another implementation manner, the terminal device may send second information including the updated location parameter when determining that the location parameters of the terminal device has changed.

For example, when the location parameter is a cell identifier, in the case that a serving cell of the terminal device changes, the second information sent by the terminal device may include an updated cell identifier.

For example, when the location parameter is a location area identifier, in the case that the location area of the terminal device changes, the second information sent by the terminal device may include an updated location area identifier.

In another implementation, the terminal device may send second information when it is determined that the energy status parameter of the terminal device has changed, or the location parameter of the terminal device has changed. The second information may include the energy status parameter and the location parameter.

In yet another implementation, the terminal device may send second information when it is determined that both the energy status parameter and the location parameter of the terminal device have changed. The second information may include the energy status parameter and the location parameter.

In some embodiments of the present disclosure, the terminal device may periodically send the second information related to the energy of the terminal device.

It should be noted that, in the absence of contradiction, this embodiment can be combined with other embodiments or implementations involved in the communication methods of the terminal device and their various optional schemes. The introduction in the aforementioned embodiments of the present disclosure may be referred to, and no further details will be given here.

FIG. 5 is a flowchart of a communication method according to an exemplary embodiment. The method may be applied to a terminal device. As shown in FIG. 5, the method may include the following steps.

In S501, the terminal device sends second information related to energy of the terminal device via a terminal device status update message.

For example, the terminal device may send a terminal device status update message (UE Status Update), which may include second information related to the energy of the terminal device. The second information may include an energy status parameter and/or a location parameter of the terminal device.

It should be noted that, in the absence of contradiction, this embodiment can be combined with other embodiments or implementations involved in the communication methods of the terminal device and their various optional schemes. The introduction in the aforementioned embodiments of the present disclosure may be referred to, and no further details will be given here.

In this way, the terminal device can send the second information related to the energy of the terminal device through the terminal device status update message.

In some embodiments, after sending the terminal device status update message, the terminal device may also receive a terminal device status update complete message.

In some embodiments, the terminal device status update complete message may include a location report trigger parameter (location report trigger), which can be used to instruct the terminal device to send new location information to the network device when leaving the local area.

For example, the terminal device may send the terminal device status update message to the network device (e.g., AF), and then receive a terminal device status update complete message (UE Status Update Complete) sent by the network device in response to the terminal device status update message.

In one implementation, if the terminal device does not receive the terminal device status update complete message from the network device within a preset time after sending the terminal device status update message, the terminal device status update message can be resent, thereby enhancing the reliability of message sending. The preset time may be any time length preset by the terminal device, such as 1 second or 3 seconds.

FIG. 6 is a flowchart of a communication method according to an exemplary embodiment. The method may be applied to a terminal device. As shown in FIG. 6, the method may include the following steps.

In S601, the terminal device sends first information related to energy of the terminal device.

The first information may include one or more of a power source indication parameter, an energy status parameter and a location parameter of the terminal device, and may also include other information related to the energy.

In S602, the terminal device sends second information related to the energy of the terminal device.

The second information may include an energy status parameter and/or a location parameter of the terminal device. The second information may be the same as or different from the first information.

It should be noted that, in the absence of contradiction, this embodiment can be combined with other embodiments or implementations involved in the communication method of the terminal device and their various optional schemes. The introduction in the aforementioned embodiments of the present disclosure may be referred to, and no further details will be given here.

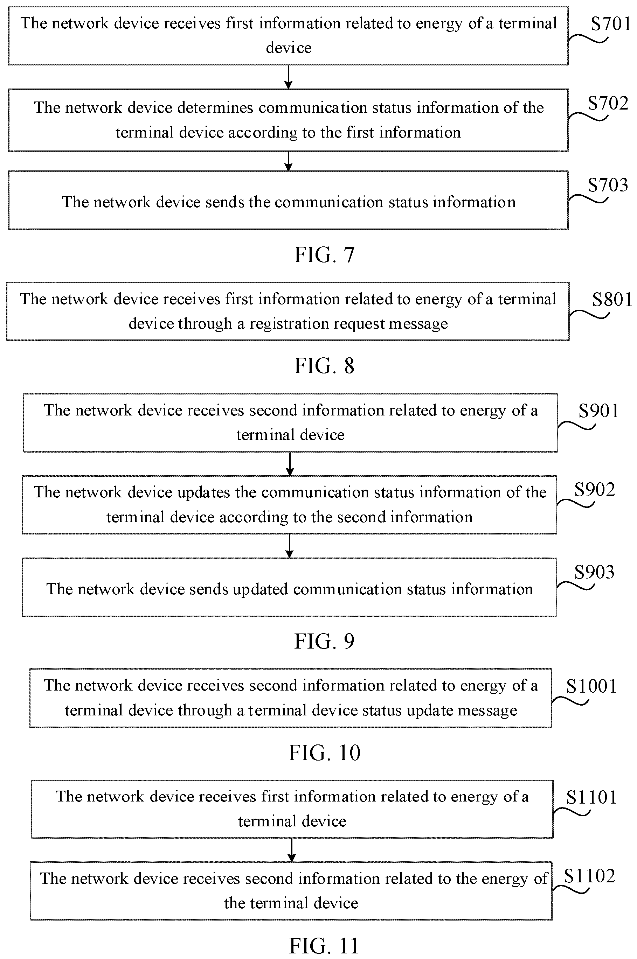

FIG. 7 is a flowchart of a communication method according to an exemplary embodiment. The method can be applied to the network device in the above communication system. As shown in FIG. 7, the method may include the following steps.

In S701, the network device receives first information related to energy of a terminal device.

In some embodiments of the present disclosure, the first information may include one or more of a power source indication parameter, an energy status parameter, and a location parameter of the terminal device, and may also include other information related to the energy.

The power source indication parameter may be used to indicate the power source of the terminal device. The power source of the terminal device may be at least one of solar energy (solar), light energy (light), wind energy (wind), motion energy/vibration energy (motion/vibration), heat energy (heat), and pressure energy (pressure), or may also be any other power source.

The energy status parameter may be used to indicate the current energy status of the terminal device.

In one implementation, the energy status parameter may be a parameter of an enumeration type. For example, the energy status of the terminal device may include a normal energy status (Normal energy), a low energy status (Low energy) or an extremely low energy status (Almost No energy). The value of the energy status parameter may include numerical values indicating the above three energy statuses. For example, a value of the energy status parameter being 1 may indicate that the terminal device is in the normal energy status, a value of the energy status parameter being 2 may indicate that the terminal device is in the low energy status, and a value of the energy status parameter being 3 may indicate that the terminal device is in the extremely low energy status.

In another implementation, the energy status parameter may be any numerical value between MIN and MAX, where MIN is used to represent the minimum value of the remaining energy of the terminal device (e.g., 0), and MAX may be used to represent the maximum value of the remaining energy of the terminal device (e.g., 1, 10, or 100).

The location parameter may be used to indicate the current location information of the terminal device.

In one implementation, the location parameter may include longitude and latitude information.

In another implementation, the location parameter may include at least one of a cell identifier, a base station identifier, a location area identifier, and an operator identifier.

In some embodiments of the present disclosure, the above-mentioned first information may also include a terminal identification parameter.

In some embodiments of the present disclosure, the above-mentioned first information may be used to instruct the network device to determine the communication status information of the terminal device.

In S702, the network device determines communication status information of the terminal device according to the first information.

In some embodiments of the present disclosure, the communication status information may include a target communication status parameter, and the target communication status parameter is used to indicate the communication status of the terminal device.

For example, the communication status of the terminal device may include any one of a normal status (normal), a receiver-only working status (receiver only) and a dormant status (dormant).

In the case that the terminal device is in the normal status, the terminal device can normally receive signaling and/or data sent by the network device, and can also normally send signaling and/or data to the network device.

In the case that the terminal device is in the receiver-only working status, the terminal device may only receive signaling and/or data sent by the network device, and does not actively send signaling and data to the network device. In this status, the network device is not expected to receive signaling and data from the terminal device.

In the case that the terminal device is in the dormant status, the terminal device cannot receive signaling and data sent by the network device, nor can it send signaling and/or data to the network device. In this status, the network device cannot send signaling and data to the terminal device, nor can it receive signaling and data from the terminal device.

In some other embodiments of the present disclosure, the communication status information may include the above-mentioned target communication status parameter and a valid time parameter. The valid time parameter may be used to indicate a valid time range of the target communication status parameter.

In one implementation, the valid time parameter may include a valid duration. The valid duration is used to indicate that the target communication status parameter takes effect from the moment the target communication status parameter is sent or received and becomes invalid after the valid duration.

In another implementation, the valid time parameter may include a start moment and a valid duration. The target communication status may take effect from the start time and become invalid after the valid duration.

In another implementation, the valid time parameter may include a start moment and an end moment. The target communication status may take effect from the start moment and become invalid at the end moment.

In some embodiments, the communication status information mentioned above may also include a terminal identification parameter.

In some embodiments, the network device can determine at least one of a power source type, an energy status and location information of the terminal device according to the first information, and determine the communication status information of the terminal device according to at least one of the power source type, energy status and location information.

There may be multiple ways for the network device to determine at least one of the power source type, energy status, and location information of the terminal device according to the first information. The examples are as follows.

In the case where the first information includes the power source indication parameter of the terminal device, the power source type of the terminal device can be determined according to the power source indication parameter. In the case where the first information does not include the power source indication parameter of the terminal device, a preset power source type can be used as the power source type of the terminal device, and the preset power source type may be any power source set in advance, such as solar energy, wind energy or other power sources.

In the case where the first information includes the energy status parameter of the terminal device, the energy status of the terminal device can be determined according to the energy status parameter. In the case where the first information does not include the energy status parameter of the terminal device, a preset energy status can be used as the energy status of the terminal device. The preset energy status may be any status set in advance, for example, the preset energy status may be a normal energy status.

In the case where the first information includes the location parameter of the terminal device, the location information of the terminal device can be determined according to the location parameter. In the case where the first information does not include the location parameter of the terminal device, the location information can be determined according to the historical information of the terminal device, for example, the location information can be determined according to the historical location parameter most recently reported by the terminal device.

There may be multiple ways for the network device to determine the communication status information of the terminal device according to at least one of the power source type, energy status and location information. The examples are as follows.

In some embodiments, the network device may determine the communication status information according to the energy status of the terminal device.

For example, in the case that the energy status of the terminal device is a normal energy status, it can be determined that the communication status of the terminal device is a normal state, and the communication status information is determined according to the communication status.

For another example, in the case that the energy status of the terminal device is a low energy status, it can be determined that the communication status of the terminal device is a receiver-only working state, and the communication status information is determined according to the communication status.

For yet another example, in the case that the energy status of the terminal device is in an extremely low energy status, it can be determined that the communication status of the terminal device is a dormant status, and the communication status information is determined according to the communication status.

In other embodiments, the network device may determine the communication status information according to the power source type and energy status of the terminal device.

For example, in the case that the power source type of the terminal device is the ambient power (such as solar energy or wind energy, etc.) and the energy status parameter is a low energy status, it can be determined that the communication status of the terminal device is a receiver-only working state, and the communication status information is determined according to the communication status.

For another example, in the case that the power source type of the terminal device is the ambient power (such as solar energy or wind energy, etc.) and the energy status parameter is an extremely low energy status, it can be determined that the communication status of the terminal device is a dormant state, and the communication status information is determined according to the communication status.

In some other embodiments, the network device may determine the communication status information according to the power source type, energy status and location information of the terminal device.

In some embodiments of the present disclosure, the network device may obtain weather information based on the location information, and determine the communication status information of the terminal device according to at least one of the power source type and the energy status, and the weather information.

For example, the network device can determine the location area according to the location information, and obtain the weather information corresponding to the location area. For example, the location information may be a cell identifier or longitude and latitude, and the location area may include a city-level administrative area, a county-level administrative area, a township-level administrative area, or other areas where weather information can be obtained. The weather information corresponding to the location area can be obtained by obtaining the weather prediction information corresponding to the location area from the meteorological department.

The weather information may include at least one of weather status, wind force level, wind direction, air pressure, humidity, precipitation, air quality, etc. Specifically, the weather status may be any one of sunny, cloudy, overcast, rainy or snowy.

In some embodiments, the network device may determine the communication status information of the terminal device according to the power source type and the weather information.

For example, in the case that the power source type is solar energy and the weather status in the weather information is sunny within a specified time, it can be determined that the communication status of the terminal device is normal.

For another example, in the case that the power source type is solar energy and the weather status in the weather information is not sunny (such as cloudy, rainy or snowy) within the specified time, it can be determined that the communication status of the terminal device is the receiver-only working state.

In other embodiments, the communication status information of the terminal device may be determined according to the energy status and weather information.

For example, in the case that the energy status is normal and the weather status in the weather information is not sunny (such as cloudy, rainy or snowy) within the specified time, it can be determined that the communication status of the terminal device is a receiver-only working status.

For another example, in the case that the energy status is the receiver-only working status is working and the weather status in the weather information is sunny within the specified time, it can be determined that the communication status of the terminal device is normal.

In some other embodiments, the network device may determine the communication status information of the terminal device according to the power source type, the energy status and the weather information.

For example, in the case that the power source type is solar energy, the communication status information of the terminal device can be determined according to the weather status in the weather information.

In one implementation, in the case that the energy status of the terminal device is a normal energy status and the weather status is sunny within a specified time, it can be determined that the communication status of the terminal device is a normal status. In the normal status, the terminal device can normally receive signaling and/or data sent by the network device, and can also normally send signaling and/or data to the network device.

In another implementation, in the case that the energy status of the terminal device is a low energy status and the weather status is not sunny (e.g., cloudy, rainy, or snowy) within a specified time, the communication status of the terminal device can be determined to be a receiver-only working status. In the receiver-only working status, the terminal device can receive signaling and/or data sent by the network device, but will not send signaling and data to the network device.

In another implementation, in the case that the energy status of the terminal device is in an extremely low energy status and the weather status is not sunny (e.g., cloudy, rainy, or snowy) within a specified time, it can be determined that the communication status of the terminal device is a dormant status. In the dormant status, the terminal device will not receive signaling and data sent by the network device, nor will it send signaling and data to the network device.

In yet another implementation, the above-mentioned specified time may be any preset time information, and the specified time may be used as valid time information in the communication status information.

In some other embodiments of the present disclosure, in the case that the power source type is wind energy, the communication status information of the terminal device can be determined according to the wind force level in the weather information.

In one implementation, in the case that the energy status of the terminal device is a normal energy status and the wind force level is greater than or equal to a first preset level within a specified time, it can be determined that the communication status of the terminal device is a normal status.

In another implementation, in the case that the energy status of the terminal device is a low energy status and the wind force level is less than or equal to a second preset level within a specified time, the communication status of the terminal device can be determined to be a receiver-only working status. The second preset level may be less than the first preset level.

In another implementation, in the case that the energy status of the terminal device is in an extremely low energy status and the wind force level is less than or equal to a second preset level within a specified time, it can be determined that the communication status of the terminal device is a dormant status.

In yet another implementation, the above-mentioned specified time may be any preset time information, and the specified time may be used as valid time information in the communication status information.

In this way, the communication status information of the terminal device can be determined according to the first information.

In S703, the network device sends the communication status information.

In some embodiments, the network device may send the communication status information to other network device(s).

For example, in the case that the network device is AF, the AF can send the communication status information to at least one of Network Exposure Function (NEF), User Plane Function (UPF), Policy Control Function (PCF), Access and Mobility Management Function (AMF), Session Management Function (SMF) and access network device, or to other network device(s) in the communication system.

In one implementation, AF can send the communication status information to at least one of UPF, PCF, SMF, AMF and access network device via NEF. Upon receiving the communication status information, UPF, PCF, SMF, AMF and access network device can store the communication status information of the terminal device and treats the communication of the terminal device according to the communication status information.

In some embodiments, the network device may also send the communication status information to the terminal device. The terminal device may determine the current status of the terminal device according to the communication status information.

By adopting the above method, the network device receives the first information related to the energy of the terminal device, determines the communication status information of the terminal device according to the first information, and sends the communication status information. In this way, the network device can determine the communication status information of the terminal device according to the first information related to the energy, so as to better support the ambient Internet of Things communication and realize the effective response of always-on communication or on-demand communication.

In some embodiments, the first information may be information sent by the terminal device to the network device.

The network device may also send a reception confirmation to the terminal device, and the reception confirmation is used to indicate that the network device has received the first information. If the terminal device does not receive the reception confirmation within a preset time after sending the first information, the first information may be resent, thereby enhancing the reliability of information sending. The preset time may be any time length preset by the terminal device, such as 1 second or 3 seconds.

In other embodiments, the network device may send an information sending request to the terminal device, where the information sending request is used to instruct the terminal device to send the first information related to the energy of the terminal device to the network device.

In some embodiments, the network device may receive the first information related to the energy of the terminal device via a NAS message.

In other embodiments, the network device may receive the first information related to the energy of the terminal device via an AS message or an RRC message.

For example, in the case that the network device is an access network device, the first information related to the energy of the terminal device can be received through an AS message or an RRC message. Alternatively, in the case that the network device is an AF, the access network device can receive the first information through an AS message or an RRC message, and forward the first information to the AF. For example, the access network device sends the first information to the AMF, and the AMF forwards the first information to the AF through the AEF.

In some embodiments, the above-mentioned network device may be an application function (AF), or may be other entities that provide the application service, or may be other entities that manage the communication status of the terminal device.

FIG. 8 is a flowchart of a communication method according to an exemplary embodiment. The method can be applied to a network device. As shown in FIG. 8, the method may include the following steps.

In S801, the network device receives first information related to energy of a terminal device through a registration request message.

For example, the network device may receive a registration request message, which may include first information related to the energy of the terminal device. The first information may include one or more of a power source indication parameter, an energy status parameter, and a location parameter of the terminal device. The registration request message may be a message sent by the terminal device.

It should be noted that, in the absence of contradiction, this embodiment can be combined with other embodiments or implementation methods involved in the communication methods for the network device and their various optional schemes. The introduction in the aforementioned embodiments of the present disclosure may be referred to and no further details will be given here.

In this way, the network device can receive the first information related to the energy of the terminal device through the registration request message.

In some embodiments, after receiving the registration request message, the network device may also send a registration acceptance message. For example, the network device (e.g., AF) may send the registration acceptance message in the case that the terminal device is successfully registered according to the registration request message.

It should be noted that, in the absence of contradiction, this embodiment can be combined with other embodiments or implementation methods involved in communication methods for the network device and their various optional schemes. The introduction in the aforementioned embodiments of the present disclosure may be referred to and no further details will be given here.

FIG. 9 is a flowchart of a communication method according to an exemplary embodiment. The method can be applied to a network device. As shown in FIG. 9, the method may include the following steps.

In S901, the network device receives second information related to energy of a terminal device.

The second information may include an energy status parameter and/or a location parameter of the terminal device. The second information may be the same as or different from the first information.

In some embodiments, the second information may be a subset of the first information. For example, the first information may include a static parameter and dynamic parameter related to the energy of the terminal device; the second information may include the dynamic parameter related to the energy of the terminal device. The static parameter includes an inherent parameter related to the hardware or structure of the terminal device, such as a power source indication parameter; the dynamic parameter may include a variable parameter related to the energy of the terminal device, such as an energy status parameter and/or location parameter.

In some embodiments of the present disclosure, the terminal device may send second information including the updated parameter related to energy in the case of determining that the parameter related to energy of the terminal device has changed.

In some other embodiments of the present disclosure, the terminal device may periodically send second information related to the energy of the terminal device.

In S902, the network device updates the communication status information of the terminal device according to the second information.

By way of example, the network device determines new communication status information according to the second information, and uses the new communication status information as updated communication status information.

In some embodiments, the network device obtains at least one of the power source type, energy status and location information of the terminal device, and determines the communication status information of the terminal device according to at least one of the power source type, energy status and location information.

In one implementation, the network device may predetermine the power source type of the terminal device. For example, the power source type may be a preset type or a type determined according to the received first information.

In one implementation, the network device may determine at least one of the energy status and location information of the terminal device according to the second information.

It should be noted that the specific implementation manner of the network device in this step can refer to the description of S702 in the aforementioned embodiments of the present disclosure, and will not be repeated here.

In S903, the network device sends updated communication status information.

It should be noted that, in the absence of contradiction, this embodiment can be combined with other embodiments or implementation methods involved in communication methods for the network device and their various optional schemes. The introduction in the aforementioned embodiments of the present disclosure may be referred to and no further details will be given here.

In this way, the network device can receive the second information related to the energy of the terminal device through the terminal device status update message.

It should be noted that, in the absence of contradiction, this embodiment can be combined with other embodiments or implementation methods involved in communication methods for the network device and their various optional schemes. The introduction in the aforementioned embodiments of the present disclosure may be referred to and no further details will be given here.

FIG. 10 is a flowchart of a communication method according to an exemplary embodiment. The method may be applied to a network device. As shown in FIG. 10, the method may include the following steps.

In S1001, the network device receives second information related to energy of a terminal device through a terminal device status update message.

For example, the network device may receive a terminal device status update message (UE Status Update), which may include second information related to energy of the terminal device. The second information may include an energy status parameter and/or a location parameter of the terminal device.

It should be noted that, in the absence of contradiction, this embodiment can be combined with other embodiments or implementation methods involved in communication methods for the network device and their various optional schemes. The introduction in the aforementioned embodiments of the present disclosure may be referred to and no further details will be given here.

In this way, the network device can receive the second information related to the energy of the terminal device through the terminal device status update message.

In some embodiments, the network device may further send a terminal device status update complete message in the case of receiving the terminal device status update message. The terminal device status update complete message may be used to indicate that the network device has received the terminal device status update message.

FIG. 11 is a flowchart of a communication method according to an exemplary embodiment. The method may be applied to a network device. As shown in FIG. 11, the method may include the following steps.

In S1101, the network device receives first information related to energy of a terminal device.

The first information may include one or more of a power source indication parameter, an energy status parameter and a location parameter of the terminal device, and may also include other information related to the energy.

In S1102, the network device receives second information related to the energy of the terminal device.

The second information may include an energy status parameter and/or a location parameter of the terminal device. The second information may be the same as or different from the first information.

It should be noted that, in the absence of contradiction, this embodiment can be combined with other embodiments or implementation methods involved in communication methods for the network device and their various optional schemes. The introduction in the aforementioned embodiments of the present disclosure may be referred to and no further details will be given here.

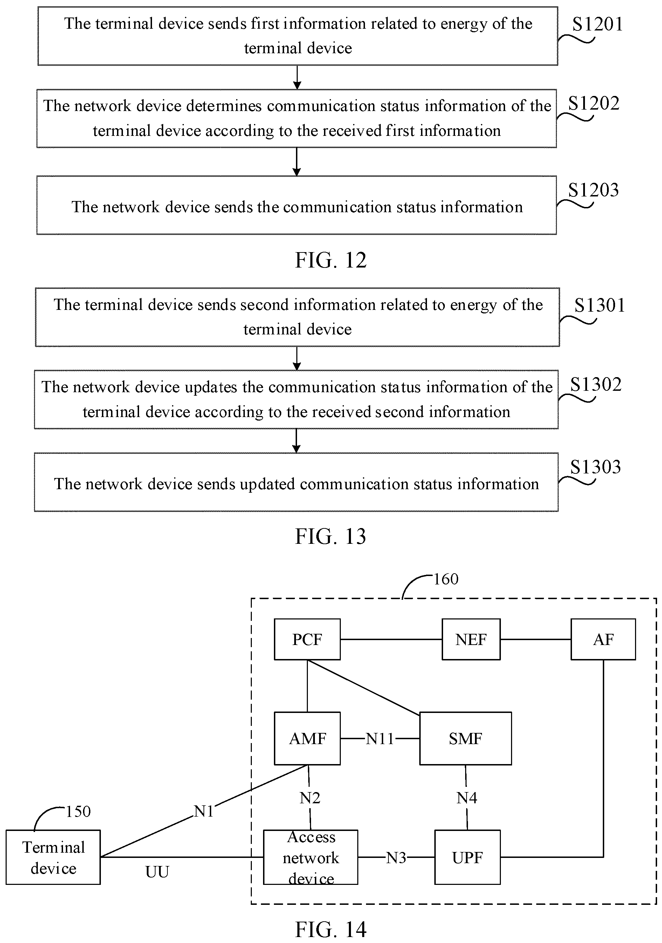

FIG. 12 is a flowchart of a communication method according to an exemplary embodiment. As shown in FIG. 12, the method may include the following steps.

In S1201, the terminal device sends first information related to energy of the terminal device.

In some embodiments, the first information may include one or more of a power source indication parameter, an energy status parameter, and a location parameter of the terminal device, and may also include other information related to the energy.

In some embodiments, the terminal device may send the first information related to the energy of the terminal device via a registration request message.

In S1202, the network device determines communication status information of the terminal device according to the received first information.

In S1203, the network device sends the communication status information.

It should be noted that the specific implementation manner of the above steps in this embodiment can refer to the description in the previous embodiments of the present disclosure and will not be repeated here.

By adopting the above method, the terminal device sends the first information related to the energy of the terminal device, and the network device determines the communication status information of the terminal device according to the received first information, and sends the communication status information. Thus, it is possible to better support the ambient Internet of Things communication according to the first information related to the energy of the terminal device, and realize the effective response of always-on communication or on-demand communication.

FIG. 13 is a flowchart of a communication method according to an exemplary embodiment. As shown in FIG. 13, the method may include the following steps.

In S1301, the terminal device sends second information related to energy of the terminal device.

The second information may include an energy status parameter and/or a location parameter of the terminal device. The second information may be the same as or different from the first information.

In S1302, the network device updates the communication status information of the terminal device according to the received second information.

In S 1303, the network device sends updated communication status information.

It should be noted that the specific implementation manners of the above steps in this embodiment can refer to the description in the previous embodiments of the present disclosure and will not be repeated here.

By adopting the above method, the terminal device sends the second information related to the energy of the terminal device, and the network device updates the communication status information of the terminal device according to the received second information, and sends the updated communication status information. Thus, it is possible to better support the ambient Internet of Things communication according to the first information related to the energy of the terminal device, and realize the effective response of always-on communication or on-demand communication.

FIG. 14 is a schematic diagram of a communication system according to an exemplary embodiment. As shown in FIG. 14, the communication system may include a terminal device 150 and a network device 160, and the network device 160 may include at least one of an access network device, UPF, PCF, SMF, AMF, NEF, and AF. For the specific functions, connection relationships, and implementation manners of the above-mentioned access network device, UPF, PCF, SMF, AMF, NEF, and AF, reference may be made to the relevant descriptions in the relevant technologies (e.g., 3GPP protocols), which are not elaborated in the present disclosure.

It should be noted that the various functions in the above-mentioned network devices may be independent functional entities or entities combined together in any way, and the above-mentioned various functions or devices can also be replaced by other functions or devices that implement similar functions.

In some embodiments, the terminal device may be an ambient power-enabled IoT device (ambient IoT device). The terminal device may be powered by an ambient power source, for example, the ambient power source may be energy from solar energy, light energy, wind energy, motion energy/vibration energy, heat energy, pressure energy, or any other power source. Since the energy of the ambient power source is not always enough to support the terminal device to communicate, the terminal device may be unable to communicate for a period of time. The terminal device may send the power source and energy status of the terminal device to the AF.

In some embodiments, the AF may receive the power source and energy status sent by the terminal device. Based on the power source and energy status from the terminal device (i.e., the ambient IoT device), and/or the weather status and weather prediction (sunny, rainy, cloudy, or snowy, etc.) from the meteorological department or application, the AF may perform data analysis and prediction to obtain the communication status of the terminal device, and may send the communication status of the terminal device to the PCF/SMF/AMF/RAN via the NEF. In addition, the AF may also send the communication status with a valid time to the PCF/SMF/AMF/RAN via the NEF.

In some embodiments, AMF/SMF/PCF can receive and store the communication status of the terminal device from AF, and use the communication status to communicate with the terminal device. For example, AMF/SMF/PCF can receive and store the communication status with a valid time.

In some embodiments, the access network device (e.g., RAN) may receive the communication status of the terminal device from the AMF via an N2 message and use it for communication management of the ambient IoT device. For example, the communication status may be a communication status with a valid time.

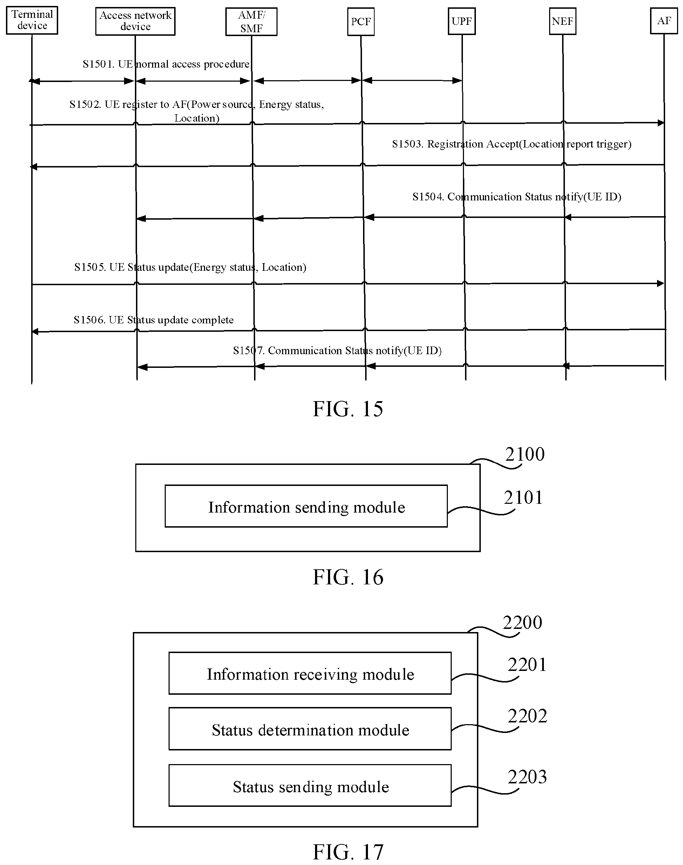

FIG. 15 is a flowchart of a communication method according to an exemplary embodiment. As shown in FIG. 15, the method may include the following steps.

In S1501, the terminal device accesses a communication system by sending a registration request and a PDU session establishment request to register and establish a PDU session in 5GS.

In S1502, during the registration process, the terminal device registers with the AF using the pre-configured IP address of the AF server. The registration request may include the power source (e.g., solar or wind energy), energy status (normal, low, or almost no energy), terminal identification (also called UE ID, such as PEI or other external ID), and UE location.

In S 1503, the AF accepts the registration request of the terminal device (UE) and stores the received UE power source (solar energy), energy status, terminal identification (also referred to as UE ID, such as PEI or other external ID) and UE location. AF sends a registration acceptance to the UE, and the registration acceptance message may include a location report trigger, which indicates to the UE that if the UE is out of the location area, it should report the latest location to the AF.

In S1504, the AF performs data analysis and prediction of the communication status of the terminal device based on at least one of the information such as the power source and energy status from the terminal device, the weather status and weather prediction (sunny, rainy, cloudy or snowy, etc.) from the meteorological department/application, and sends the communication status (normal, receiver only, dormant) with the valid time and the terminal identifier to the PCF/SMF/AMF/RAN via the NEF. The PCF/SMF/AMF/RAN stores the communication status with the valid time in the corresponding UE context in them and treats the communication of the UE accordingly.

In some embodiments, the communication status may include a normal status, a receiver-only working status, and a dormant status, and the communication status may be determined in the following manner.

In the case that the energy status of the terminal device is in a normal energy status and the weather is sunny for a period of time, the communication status of the terminal device is normal, and the AMF and other network devices can send signaling and data to the terminal device, and can receive signaling and data from the terminal device.

In the case that the energy status of the terminal device is in a low energy status and the weather is rainy for a period of time, the communication status of the terminal device may be a receiver-only working status. In this status, the AMF and other core network devices may send signaling and data to the terminal device, and no signaling and data from the terminal device is expected.

In the case that the energy status of the terminal device is "almost no energy" and the weather is rainy for a period of time, the communication status of the terminal device may be a dormant status, and the AMF and other network nodes cannot send signaling and data to the terminal device, nor can they receive signaling and data from the terminal device.

In S1505, in the case that the energy status of the terminal device changes, or the location information changes (for example, the latest location of the terminal device is out of the location area received in S1503), the terminal device can update the latest energy status and location to AF.

In S1506, the AF receives and stores the latest energy status and location of the terminal device, and sends a terminal device status update complete message to the terminal device.

In S1507, the AF performs data analysis and prediction of the communication status of the terminal device according to the received latest energy status and location (the method in S1504 may be referred to, which will not be repeated here), and sends the communication status (normal, receiver only, dormant) with the valid time and the terminal device to the PCF/SMF/AMF/RAN through the NEF. The PCF/SMF/AMF/RAN stores the communication status with the valid time in the context of the terminal device and treats the communication of the terminal device according to the communication status.

It should be noted that, in the absence of contradiction, the above steps in this embodiment may be executed individually or in any combination in any order, which is not limited by the present disclosure.

By adopting the above method, it is possible to better support ambient Internet of Things communications according to the information related to the energy of the terminal device, and to achieve effective response to always-on communications or on-demand communications.

FIG. 16 is a block diagram of a communication apparatus 2100 according to an exemplary embodiment. The apparatus 2100 may be applied to a terminal device. As shown in FIG. 16, the apparatus 2100 may include:
an information sending module 2101, configured to send first information related to energy of the terminal device; where the first information is used to instruct the network device to determine communication status information of the terminal device.

In some embodiments, the first information includes one or more of a power source indication parameter, an energy status parameter, and a location parameter of the terminal device.

In some embodiments, the information sending module 2101 is configured to send the first information via a registration request message.

In some embodiments, the information sending module 2101 is further configured to send second information related to the energy of the terminal device; the second information includes an energy status parameter and/or a location parameter of the terminal device.

In some embodiments, the information sending module 2101 is configured to send second information including an updated energy status parameter in the case that the energy status parameter of the terminal device changes.

In some embodiments, the information sending module 2101 is configured to send second information including an updated location parameter in the case that the location parameter of the terminal device changes.

In some embodiments, the information sending module 2101 is configured to periodically send the second information related to the energy of the terminal device.

In some embodiments, the information sending module 2101 is configured to send the second information via a terminal device status update message.

FIG. 17 is a block diagram of a communication apparatus 2200 according to an exemplary embodiment. The apparatus 2200 may be applied to a network device. As shown in FIG. 17, the apparatus 2200 may include:
an information receiving module 2201, configured to receive first information related to energy of a terminal device;
a status determination module 2202, configured to determine communication status information of the terminal device according to the first information;
a status sending module 2203, configured to send the communication status information.

In some embodiments, the first information includes one or more of a power source indication parameter, an energy status parameter, and a location parameter of the terminal device.

In some embodiments, the status determination module 2202 is configured to determine at least one of the power source type, energy status and location information of the terminal device according to the first information; and determine the communication status information of the terminal device according to at least one of the power source type, energy status and location information.

In some embodiments, the status determination module 2202 is configured to obtain weather information according to the location information; and determine the communication status information of the terminal device according to at least one of the power source type and the energy status, and the weather information.

In some embodiments, the communication status information includes a target communication status parameter, and the target communication status parameter is used to indicate the communication status of the terminal device.

In some embodiments, the communication status information also includes a valid time parameter, and the valid time parameter is used to indicate a valid time range of the target communication status parameter.

In some embodiments, the information receiving module 2201 is configured to receive the first information via a registration request message.

In some embodiments, the status sending module 2203 is configured to send the communication status information to at least one network device in the communication system, and the network device includes one or more of an access network device, AMF, SMF and PCF.

In some embodiments, the information receiving module 2201 is further configured to receive second information; the second information includes an energy status parameter and/or a location parameter of the terminal device;
the status determination module 2202 is further configured to update the communication status information of the terminal device according to the second information;
the status sending module 2203 is further configured to send updated communication status information.

In some embodiments, the information receiving module 2201 is configured to receive the second information via a terminal device status update message.

Regarding the apparatuses in the above embodiments, the specific manner in which each module performs operations has been described in detail in the embodiments of the method, and will not be elaborated here.

FIG. 11 is a block diagram of a communication apparatus according to an exemplary embodiment. The communication apparatus 3000 may be the terminal device in the communication system shown in FIG. 1, or may be the network device in the communication system.

Referring to FIG. 11, the apparatus 3000 may include one or more of the following components: a processing component 3002, a memory 3004, and a communication component 3006.

The processing component 3002 may be used to control the overall operation of the apparatus 3000, such as operations associated with display, phone calls, data communications, camera operations, and recording operations. The processing component 3002 may include one or more processors 3020 to execute instructions to complete all or part of the steps of the above-mentioned communication method. In addition, the processing component 3002 may include one or more modules to facilitate the interaction between the processing component 3002 and other components. For example, the processing component 3002 may include a multimedia module to facilitate the interaction between the multimedia component and the processing component 3002.

The memory 3004 is configured to store various types of data to support operations on the apparatus 3000. Examples of such data include instructions for any application or method operating on the apparatus 3000, contact data, phone book data, messages, pictures, videos, etc. The memory 3004 may be implemented by any type of volatile or non-volatile storage device or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic disk or an optical disk.

The communication component 3006 is configured to facilitate wired or wireless communication between the apparatus 3000 and other devices. The apparatus 3000 can access a wireless network based on a communication standard, such as Wi-Fi, 2G, 3G, 4G, 5G, 6G, NB-IOT, eMTC, etc., or a combination thereof. In an exemplary embodiment, the communication component 3006 receives a broadcast signal or broadcast-related information from an external broadcast management system via a broadcast channel. In an exemplary embodiment, the communication component 3006 also includes a near field communication (NFC) module to facilitate short-range communication. For example, the NFC module can be implemented based on radio frequency identification (RFID) technology, infrared data association (IrDA) technology, ultra-wideband (UWB) technology, Bluetooth (BT) technology and other technologies.

In an exemplary embodiment, the apparatus 3000 may be implemented by one or more application-specific integrated circuits (ASICs), digital signal processors (DSPs), digital signal processing devices (DSPDs), programmable logic devices (PLDs), field programmable gate arrays (FPGAs), controllers, microcontrollers, microprocessors or other electronic components to perform the above-mentioned communication methods.

The above-mentioned apparatus 3000 can be an independent electronic device or a part of an independent electronic device. For example, in one embodiment, the electronic device can be an integrated circuit (IC) or a chip, where the integrated circuit can be one IC or a collection of multiple ICs; the chip can include but is not limited to the following types: Graphics Processing Unit (GPU), Central Processing Unit (CPU), Field Programmable Gate Array (FPGA), Digital Signal Processor (DSP), Application Specific Integrated Circuit (ASIC), SOC (System on Chip, SoC), etc. The above-mentioned integrated circuit or chip can be used to execute executable instructions (or codes) to implement the above-mentioned communication methods. The executable instructions can be stored in the integrated circuit or chip, or can be obtained from other apparatus or device, for example, the integrated circuit or chip includes a processor, a memory, and an interface for communicating with other apparatus. The executable instructions may be stored in the processor, and when the executable instructions are executed by the processor, the above-mentioned communication methods are implemented. Alternatively, the integrated circuit or chip may receive the executable instruction through the interface and transmit it to the processor for execution, so as to implement the above-mentioned communication methods.

In an exemplary embodiment, the present disclosure further provides a computer-readable storage medium having computer program instructions stored thereon, which, when executed by a processor, implement the steps of the communication methods provided by the present disclosure. By way of example, the computer-readable storage medium may be a non-transitory computer-readable storage medium including instructions, for example, the above-mentioned memory 3004 including instructions, and the above-mentioned instructions may be executed by the processor 3020 of the apparatus 3000 to complete the above-mentioned communication methods. For example, the non- transitory computer-readable storage medium may be a ROM, a random access memory (RAM), a CD-ROM, a magnetic tape, a floppy disk, an optical data storage device, and the like.

In another exemplary embodiment, a computer program product is also provided. The computer program product includes a computer program executable by a programmable apparatus, and the computer program has a code portion for executing the above communication methods when executed by the programmable apparatus.

Those skilled in the art will readily appreciate other embodiments of the present disclosure after considering the specification and practicing the present disclosure. This application is intended to cover any variations, uses or adaptations of the present disclosure, which follow the general principles of the present disclosure and include common knowledge or customary technical means in the art that are not disclosed in the present disclosure. The specification and embodiments are to be regarded as exemplary only, and the true scope and spirit of the present disclosure are indicated by the following claims.

It should be understood that the present disclosure is not limited to the exact structures that have been described above and shown in the drawings, and that various modifications and changes may be made without departing from the scope thereof. The scope of the present disclosure is limited only by the appended claims.

## Claims

1. A communication method, applied to a terminal device, the method comprising:
sending first information related to energy of the terminal device; wherein the first information is used to instruct a network device to determine communication status information of the terminal device.

2. The method according to claim 1, wherein the first information comprises one or more of a power source indication parameter, an energy status parameter and a location parameter of the terminal device.

3. The method according to claim 1 or 2, wherein sending the first information related to the energy of the terminal device comprises:
sending the first information via a registration request message.

4. The method according to any one of claims 1 to 3, wherein the method further comprises:
sending second information related to the energy of the terminal device; wherein the second information comprises an energy status parameter and/or a location parameter of the terminal device.

5. The method according to claim 4, wherein sending the second information related to the energy of the terminal device comprises:
in a case that the energy status parameter of the terminal device changes, sending the second information comprising an updated energy status parameter.

6. The method according to claim 4 or 5, wherein sending the second information related to the energy of the terminal device comprises:
in a case that the location parameter of the terminal device changes, sending the second information comprising an updated location parameter.

7. The method according to any one of claims 4 to 6, wherein sending the second information related to the energy of the terminal device comprises:
periodically sending the second information related to the energy of the terminal device.

8. The method according to any one of claims 4 to 7, wherein sending the second information related to the energy of the terminal device comprises:
sending the second information via a terminal device status update message.

9. A communication method, applied to a network device, the method comprising:
receiving first information related to energy of a terminal device;
determining communication status information of the terminal device according to the first information; and
sending the communication status information.

10. The method according to claim 9, wherein the first information comprises one or more of a power source indication parameter, an energy status parameter and a location parameter of the terminal device.

11. The method according to claim 9 or 10, wherein determining the communication status information of the terminal device according to the first information comprises:
determining at least one of a power source type, an energy status, and location information of the terminal device according to the first information; and
determining the communication status information of the terminal device according to at least one of the power source type, the energy status and the location information.

12. The method according to claim 11, wherein determining the communication status information of the terminal device according to at least one of the power source type, the energy status and the location information comprises:
acquiring weather information according to the location information;
determining the communication status information of the terminal device according to at least one of the power source type and the energy status, and the weather information.

13. The method according to any one of claims 9 to 12, wherein the communication status information comprises a target communication status parameter, and the target communication status parameter is used to indicate a communication status of the terminal device.

14. The method according to claim 13, wherein the communication status information further comprises a valid time parameter, and the valid time parameter is used to indicate a valid time range of the target communication status parameter.

15. The method according to any one of claims 9 to 14, wherein receiving the first information related to the energy of the terminal device comprises:
receiving the first information through a registration request message.

16. The method according to any one of claims 9 to 15, wherein the network device is an application function (AF).

17. The method according to claim 16, wherein sending the communication status information comprises:
sending the communication status information to at least one other network device in a communication system, wherein the other network device comprises one or more of an access network device, an AMF, an SMF and a PCF.

18. The method according to any one of claims 9 to 17, wherein the method further comprises:
receiving second information; wherein the second information comprises an energy status parameter and/or a location parameter of the terminal device;
updating the communication status information of the terminal device according to the second information; and
sending updated communication status information.

19. The method according to claim 18, wherein receiving the second information comprises:
receiving the second information via a terminal device status update message.

20. A communication apparatus, applied to a terminal device, and the apparatus comprising:
an information sending module, configured to send first information related to energy of the terminal device; wherein the first information is used to instruct a network device to determine communication status information of the terminal device.

21. A communication apparatus, applied to a network device, and the apparatus comprising:
an information receiving module, configured to receive first information related to energy of a terminal device;
a status determination module, configured to determine communication status information of the terminal device according to the first information; and
a status sending module, configured to send the communication status information.

22. A communication apparatus, comprising:
a processor; and
a memory for storing instructions executable by the processor;
wherein the processor is configured to execute the steps of the method according to any one of claims 1 to 8, or the processor is configured to execute the steps of the method according to any one of claims 9 to 19.

23. A computer-readable storage medium having computer program instructions stored thereon, wherein when the computer program instructions are executed by a processor, the steps of the method according to any one of claims 1 to 8 are implemented, or when the computer program instructions are executed by a processor, the steps of the method according to any one of claims 9 to 19 are implemented.
